# EUROPÄISCHE PATENTSCHRIFT

(11) **EP 2 339 309 B1**
(45) Veröffentlichungstag und Bekanntmachung des Hinweises auf die Patenterteilung: **08.05.2019**
(21) Anmeldenummer: 11159822.3
(22) Anmeldetag: 15.06.2007
(51) Int. Cl.: G01K 13/02

(54) **Temperaturmessvorrichtung**
Temperature measuring device
Dispositif de mesure de température

(30) Priorität: 06.07.2006 DE 102006031343
(43) Veröffentlichungstag der Anmeldung: 29.06.2011
(62) Teilanmeldung aus: 07764375.7
(73) Patentinhaber: TDK Electronics AG, 81671 München (DE)
(72) Erfinder: Ostrick, Bernhard, 14513 Teltow (DE); Balzer, Peter, 10179 Berlin (DE); Grundmann, Wolfgang, 16547 Birkenwerder (DE)
(74) Vertreter: Epping - Hermann - Fischer

(56) Entgegenhaltungen:
- WO-A1-02/071551
- DE-A1- 19 608 675
- JP-A- 2002 005 757
- JP-A- 2006 058 231

## Beschreibung

Temperaturfühler sind z. B. aus der Druckschrift DE 10340636 B3 bekannt.

Die Druckschrift JP 2002 005757 A offenbart eine Temperaturmessvorrichtung, die ein Rohrstück mit einer in das Innere des Rohrstücks ragenden Ausbuchtung aufweist, wobei in der Ausbuchtung ein Sensorelement eingebettet ist. Das Rohrstück ist zur Durchführung eines Mediums vorgesehen, dessen Temperatur mit Hilfe des Sensorelements erfassbar ist.

In der Druckschrift DE 196 08 675 A1 ist eine Temperaturmessvorrichtung beschrieben, bei der ein Temperaturfühler in einem Rohrstutzen angeordnet ist, wobei der Rohrstutzen mit einer Rohrleitung derart verbunden ist, dass eine T-Rohrkombination entsteht. Ein inneres Stutzende ragt dabei in das Leitungsprofil der Rohrleitung hinein.

Die Druckschrift JP 2006 058231 A zeigt eine Temperaturmessvorrichtung, bei der eine Schutzröhre mit einem Fühlkopf in eine Ausnehmung eines Rohrstücks eingesetzt ist. Die Schutzröhre ragt dabei in das Innere des Rohrstücks.

Die Druckschrift WO 02/071551 A1 offenbart eine Steckvorrichtung mit einer Feder, die an einem Aggregatstecker integriert ist und an einem Hinterschnitt eines Aufnahmeteils angreift und so den Aggregatstecker 3 an dem Aufnahmeteil befestigt.

Bei dem Aufnahmeteil kann es sich beispielsweise um ein Rohrstutzen einer Leitung handeln und der Aggregatstecker kann zum Beispiel einen Temperaturfühler aufweisen.

Die Druckschrift JPS60102003U offenbart eine Temperaturmessvorrichtung, die ein Rohrstück aufweist, in das ein wärmeleitender Körper eingebettet ist. Die Temperaturmessvorrichtung weist einen mit dem wärmeleitenden Körper in Kontakt stehenden Temperatursensor auf. Das Rohrstück ist zur Durchführung eines Mediums vorgesehen, dessen Temperatur mit Hilfe des Temperatursensors erfassbar ist.

Eine zu lösende Aufgabe besteht darin, eine Messvorrichtung anzugeben, die zur Erfassung der Temperatur eines in einem Leitungssystem strömenden Mediums geeignet ist.

Es wird eine Temperaturmessvorrichtung mit einem Fühlkopf und einem Rohrstück angegeben, in dem der Fühlkopf eingebettet, vorzugsweise eingegossen, ist. Das Rohrstück ist zur Durchführung eines Mediums vorgesehen, dessen Temperatur mittels des Fühlkopfs erfasst werden soll.

Der Fühlkopf ist vorzugsweise in der Wandung, d. h. im Mantel des Rohrstücks eingebettet.

Das Medium, das einer Temperaturmessung unterzogen werden soll, ist vorzugsweise ein durch das Röhrstück strömendes Medium wie z. B. Luft, Gas, Dampf oder eine Flüssigkeit. Die strömende Flüssigkeit kann z. B. Wasser, Öl, Kraftstoff, Lauge usw. umfassen.

Die Innenseite des Rohrstücks weist im Bereich des Fühlkopfs insbesondere keine abzudichtenden Schnittstellen, d. h. Grenzflächen zwischen zwei aneinander grenzenden Teilen, auf. Eine schnittstellenfreie Integration des Fühlkopfs in einem Teil eines Leitungssystems erlaubt eine nicht invasive Temperaturmessung eines durch das Leitungssystem durchströmenden Mediums. Eine solche Messung ist vorteilhaft, da dabei - im Gegensatz zu einer invasiven Temperaturmessung, bei der ein Fühlkopfs durch die Wand des Leitungssystems durchgeführt wird - keine Undichtigkeiten entstehen können.

Das Rohrstück weist vorzugsweise eine nach innen gewandte Hervorhebung auf, in der zumindest ein Teil des Fühlkopfs eingeschlossen ist. Der Fühlkopf kann aber auch in einem Bereich der Wand des Rohrstücks eingeschlossen sein, der keine nach innen ragenden Hervorhebungen aufweist.

Das Rohrstück kann stirnseitig angeordnete Rastvorrichtungen aufweisen, die insbesondere das Aufbringen von Schläuchen eines Leitungssystems ermöglichen. Beispielsweise kann das Rohrstück der angegebenen Messvorrichtung zwischen zwei Schläuchen angeordnet sein, durch die das Kühlwasser zur Kühlung eines Motors fließt.

Das Rohrstück kann auch aus einem Material mit elastischen Eigenschaften ausgebildet sein. Ein derart ausgebildetes Rohrstück kann als Dichtung zwischen zwei Rohren verwendet werden.

Das Rohrstück kann stirnseitig einen größeren Durchmesser als in den angrenzenden Bereichen, eine Abschrägung und/oder eine Rippung aufweisen.

Das Rohrstück ist vorzugsweise mit einer Steckervorrichtung monolithisch verbunden, in der elektrische Zuleitungen integriert sind, die mit dem Fühlkopf leitend verbunden sind. Durch die monolithische Verbindung des Rohrstücks und der Steckervorrichtung kann auf die Montage der Steckervorrichtung am Rohrstück mittels Haltevorrichtungen verzichtet werden.

Im Rohrstück ist erfindungsgemäß mindestens ein wärmeleitender Körper eingebettet, der den Fühlkopf berührt. Die Wärmeleitfähigkeit des wärmeleitenden Körpers übersteigt diejenige des Rohrstücks.

Der wärmeleitende Körper ist vorzugsweise flächig ausgebildet, um die Temperatur des durch das Rohr fließenden Mediums an verschiedenen Stellen des Rohrstücks aufzunehmen und zu mitteln. Der wärmeleitende Körper ist erfindungsgemäß im Rohrstück eingebettet und in der Nähe der inneren Fläche des Rohrstücks angeordnet. Der wärmeleitende Körper folgt dem Rohrumfang und ist wie ein Ring ausgebildet. Der wärmeleitende Körper kann sich aber auch in Längsrichtung des Rohrstücks erstrecken.

Der wärmeleitende Körper umfasst vorzugsweise Metall. Er kann aber auch als ein Spritzgussteil z. B. aus einem Kunststoff ausgebildet sein, der mit Metallpartikeln gefüllt ist. Auch andere Materialien mit einer hohen thermischen Leitfähigkeit sind dafür geeignet.

Vorteilhafte Ausführungsformen der Messvorrichtung werden anhand von schematischen und nicht maßstabsgetreuen Figuren erläutert. Es zeigen:
Figur 1 in einer Seitenansicht eine Messvorrichtung mit einem Rohrstück, das mit einer Steckerverbindung monolithisch verbunden ist;
Figur 2 in einer perspektivischen Seitenansicht die Messvorrichtung gemäß der Figur 1;
Figur 3 in einer weiteren Ansicht eine nicht beanspruchte Variante der Messvorrichtung gemäß den Figuren 1 und 2, die einen in eine Hervorhebung des Rohrstücks eingegossenen Fühlkopf aufweist;
Figur 4 in einer weiteren Ansicht eine nicht beanspruchte Variante der Messvorrichtung gemäß den Figuren 1 und 2, die einen in das Rohrstück eingegossenen Fühlkopf aufweist;
Figuren 5, 6 verschiedene perspektivische Ansichten des Gehäuses einer an den Fühlkopf angeschlossenen Steckerverbindung.

Die Temperaturmessvorrichtung umfasst einen Fühlkopf 1, der vorzugsweise ein NTC-Sensorelement umfasst. NTC steht für Negative Temperature Coefficient. Die Temperaturmessvorrichtung umfasst ferner ein Rohrstück 2, in dem der Fühlkopf 1 eingeschlossen ist. Der Fühlkopf 1 ist vorzugsweise im Körper des Rohrstücks derart eingegossen, dass dabei keine Schnittstellen entstehen. Insbesondere weist die Innenseite des Rohrstücks keine abzudichtenden Schnittstellen zwischen dem Rohrstück und dem Fühlelement auf.

Der Fühlkopf 1 ist mit elektrischen Zuleitungen 11 verlötet, die leitend mit den elektrischen Anschlüssen 31 der Temperaturmessvorrichtung verbunden sind. Die Zuleitungen 11 und die Anschlüsse 31 sind in einer Steckerverbindung 3 integriert, die vor dem Formen des Rohrstücks ausgeformt ist. Die Steckerverbindung 3 umfasst ein Gehäuse 30, das vorzugsweise als Formteil verfügbar ist. In diesem Gehäuse sind die Zuleitungen 11 durchgeführt. Im Gehäuse 30 sind außerdem zumindest ein Teil der Anschlüsse 31 angeordnet. Auch der Fühlkopf 1 kann in einer Variante teilweise im Gehäuse 30 angeordnet sein.

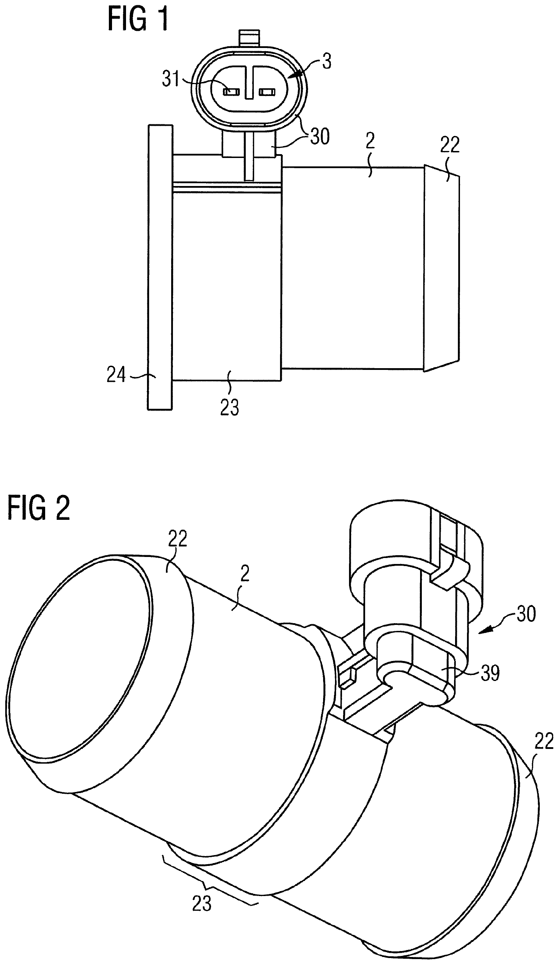

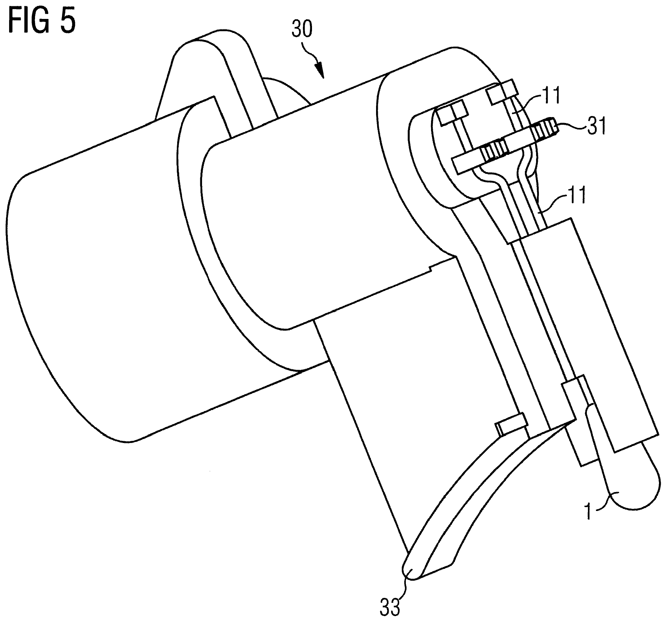

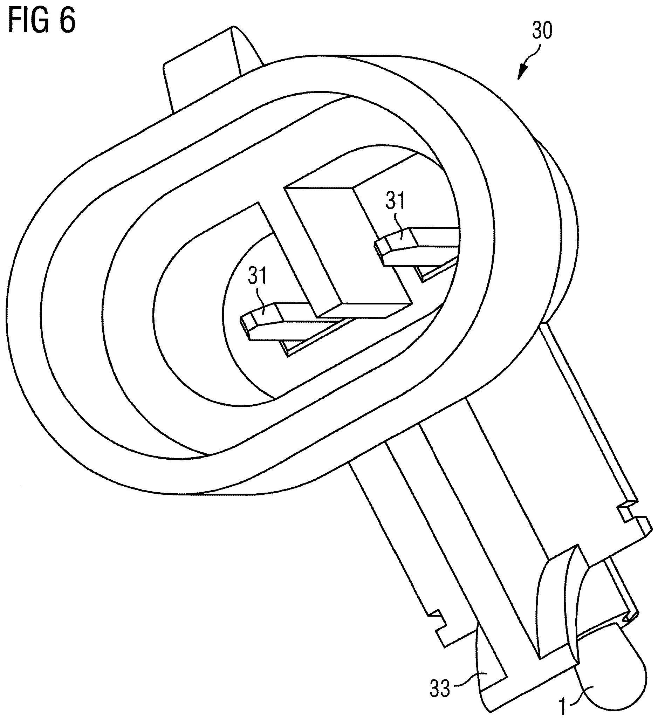

Das noch nicht in das Rohrstück 2 integrierte Gehäuse 30 ist in den Figuren 5 und 6 gezeigt. Die Zuleitungen 11 liegen frei. Der in Fig. 2 sichtbare Teil 39 des Gehäuses wird zusammen mit dem Rohrstück 2, d. h. im gleichen Verfahrensschritt erzeugt, wobei die Zuleitungen 11 in eine Gussmasse eingebettet werden. Der Teil 39 des Gehäuses 30 und das Rohrstück 2 sind in einem Stück ausgebildet.

Das Gehäuse 30 der Steckerverbindung 3 umfasst vorzugsweise einen Sockel 33, der monolithisch mit dem Rohrstück 2 verbunden ist. Der Sockel 33 weist eine Krümmung auf, die vorzugsweise einem Kreisbogen folgt, der sich aus dem Verlauf des Rohrstücks 2 ergibt.

Das Rohrstück 2 wird vorzugsweise als Formteil in einem Press- oder Spritzgussverfahren hergestellt, wobei der Sockel 33 der Steckerverbindung 3 vorzugsweise durch die Formmasse zumindest teilweise umpresst wird.

Die Steckerverbindung 3 ist an eine weitere, komplementär zu ihr ausgebildete Steckerverbindung anschließbar, die leitend mit einer Schaltung zur Auswertung der durch den Fühlkopf 1 erfassten Messsignale verbunden ist. Die Längsachse der Steckerverbindung 3 ist in den gezeigten Varianten quer zur Längsachse des Rohrstücks 2 angeordnet. Sie kann aber auch parallel oder schräg zur Längsachse des Rohrstücks 2 ausgerichtet werden.

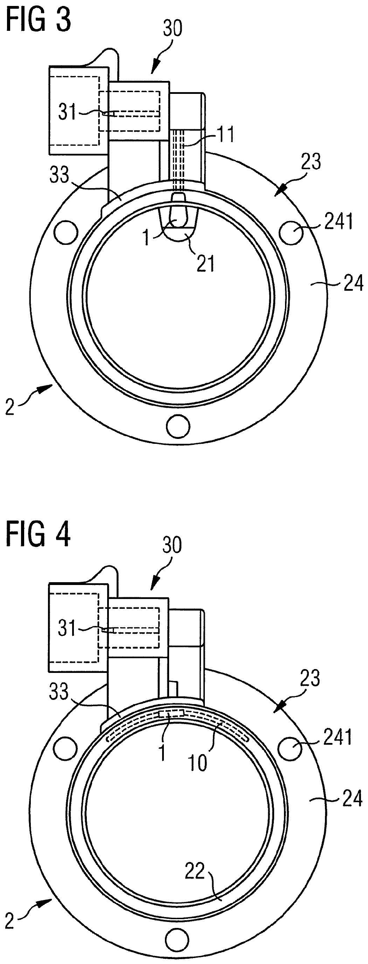

Der Fühlkopf 1 kann wie in der Variante gemäß der Figur 3 in einer Hervorhebung 21 des Rohrstücks 2 eingeschlossen sein, die in die Innenöffnung des Rohrstücks hineinragt, aber trotzdem ein Bestandteil des Rohrstücks ist.

Der Fühlkopf 1 kann alternativ wie in der Variante gemäß der Figur 4 in der Seitenwand des Rohrstücks 2 eingeschlossen sein, die im Bereich des Fühlkopfs vorzugsweise keine Hervorhebungen aufweist.

Im Rohrstück 2 kann mindestens ein gut wärmeleitender Körper 10 vorzugsweise aus Metall eingebettet sein, der den Fühlkopf 1 berührt. Unter einem gut wärmeleitenden Körper versteht man einen Körper, dessen Wärmeleitfähigkeit größer als diejenige der Umgebung (d. h. des Rohrstücks) ist.

Der wärmeleitende Körper 10 ist vorzugsweise komplett in der Wandung des Rohrstücks eingebettet. Der wärmeleitende Körper 10 ist flächig, in dieser Variante in Form eines Teilrings ausgebildet. Der wärmeleitende Körper kann auch die Form eines Topfs haben, in dem vorzugsweise ein Teil des Fühlkopfs 1 angeordnet ist.

Das Rohrstück 2 kann beidseitig an weitere Rohre angeschlossen werden und wird dann ein Bestandteil eines Leitungssystems zur Durchführung eines - vorzugsweise das Leitungssystem durchströmenden - Mediums, dessen Temperatur gemessen werden soll. Das Medium kann ein Gas oder eine Flüssigkeit umfassen.

Das Rohrstück kann als Stutzen benutzt werden, auf dessen Stirnseiten Schläuche aufgezogen werden. Stirnseitige Bereiche 22 des Rohrstücks 2 weisen vorzugsweise Rastvorrichtungen auf.

Das Rohrstücks 2, der den Fühlkopf 1 umfasst, weist im Bereich 23 eine Verdickung auf, da in diesem Bereich vorzugsweise ein Sockel der Steckerverbindung 3 eingegossen ist.

Das Rohrstück 2 kann einen Kragen 24 aufweisen, in dem Öffnungen 241 zur Aufnahme von Befestigungselementen angeordnet sind. Somit kann das Rohrstück an einem Träger befestigt werden.

### Bezugszeichenliste

- 1: Fühlkopf
- 10: wärmeleitende Körper
- 11: elektrische Zuleitungen
- 2: Rohrstück
- 21: Hervorhebung, in der der Fühlkopf 1 eingeschlossen ist
- 22: stirnseitige Bereiche des Rohrstücks 2
- 23: Bereich des Rohrstücks 2, der den Fühlkopf umfasst
- 24: Kragen
- 241: Öffnungen zur Aufnahme von Befestigungselementen
- 3: Steckerverbindung
- 30: Gehäuse der Steckerverbindung 3
- 31: elektrischer Anschluss
- 33: Sockel
- 39: Teil des Gehäuses 30

## Patentansprüche

1. Anordnung aufweisend zwei Rohre und eine Temperaturmessvorrichtung,
wobei die Temperaturmessvorrichtung einen Fühlkopf (1) und ein Rohrstück (2), in dem der Fühlkopf (1) eingebettet ist, aufweist,
wobei das Rohrstück (2) zur Durchführung eines Mediums vorgesehen ist, dessen Temperatur mittels des Fühlkopfs (1) erfassbar ist, und wobei das Rohrstück (2) als Dichtung zwischen den zwei Rohren verwendet wird,
wobei im Rohrstück (2) mindestens ein wärmeleitender Körper eingebettet ist, der den Fühlkopf (1) berührt,
wobei die Wärmeleitfähigkeit des wärmeleitenden Körpers diejenige des Rohrstücks (2) übersteigt, und
**dadurch gekennzeichnet dass** der wärmeleitende Körper dem Rohrumfang folgt und wie ein Ring ausgebildet ist.

2. Anordnung nach Anspruch 1,
- wobei das Rohrstück (2) eine nach innen gewandte Hervorhebung (21) aufweist, in der zumindest ein Teil des Fühlkopfs (1) eingeschlossen ist.

3. Anordnung nach Anspruch 1 oder 2,
- wobei die Innenseite des Rohrstücks (2) im Bereich des Fühlkopfs (1) schnittstellenfrei ist.

4. Anordnung nach einem der Ansprüche 1 bis 3,
- wobei das Rohrstück (2) stirnseitig Rastvorrichtungen aufweist.

5. Anordnung nach einem der Ansprüche 1 bis 4,
- wobei das Rohrstück (2) mit einer Steckervorrichtung (3) monolithisch verbunden ist, in der elektrische Zuleitungen (11) integriert sind, die mit dem Fühlkopf (1) leitend verbunden sind.

6. Anordnung nach einem der Ansprüche 1 bis 5,
- wobei das Rohrstück (2) in einem umlaufenden Bereich (23), der den Fühlkopf (1) umfasst, einen größeren Durchmesser als in den angrenzenden Bereichen aufweist.

7. Anordnung nach einem der Ansprüche 1 bis 6,
- wobei das Rohrstück (2) ein Spritzgussteil ist.

8. Anordnung nach einem der Ansprüche 1 bis 7,
- wobei der Fühlkopf (1) ein NTC-Element umfasst.

9. Anordnung nach einem der Ansprüche 1 bis 8,
- wobei der wärmeleitende Körper flächig ausgebildet ist.

10. Verwendung einer Temperaturmessvorrichtung als Dichtung zwischen zwei Rohren, wobei die Temperaturmessvorrichtung einen Fühlkopf (1) und ein Rohrstück (2) aufweist, in dem der Fühlkopf (1) eingebettet ist, wobei das Rohrstück (2) zur Durchführung eines Mediums vorgesehen ist, dessen Temperatur mittels des Fühlkopfs (1) erfassbar ist,
wobei im Rohrstück (2) mindestens ein wärmeleitender Körper eingebettet ist, der den Fühlkopf (1) berührt,
wobei die Wärmeleitfähigkeit des wärmeleitenden Körpers diejenige des Rohrstücks (2) übersteigt, und
wobei der wärmeleitende Körper dem Rohrumfang folgt und wie ein Ring ausgebildet ist.

## Claims

1. An arrangement comprising two pipes and a temperature measurement device,
the temperature measurement device comprising a sensor head (1) and a pipe section (2) in which the sensor head (1) is embedded,
the pipe section (2) being provided for carrying a medium, the temperature thereof being captured by the sensor head (1), and the pipe section (2) being used as a seal between the two pipes,
at least one thermally conductive body being embedded in the pipe section (2) and contacting the sensor head (1), the thermal conductivity of the thermally conductive body exceeding that of the pipe section (2),
**characterized in that**
the thermally conductive body follows the pipe circumference and is implemented as a ring.

2. The arrangement according to Claim 1,
- wherein the pipe section (2) comprises a protrusion (21) facing inward, in which at least one part of the sensor head (1) is enclosed.

3. The arrangement according to Claim 1 or 2,
- wherein the inner side of the pipe section (2) is free of interfaces in the region of the sensor head (1).

4. The arrangement according to one of the Claims 1 through 3,
- wherein the pipe section (2) comprises latching devices on the end face thereof.

5. The arrangement according to one of the Claims 1 through 4,
- wherein the pipe section (2) is monolithically connected to a plug device (3) in which electrical feed lines (11) are integrated and are conductively connected to the sensor head (1).

6. The arrangement according to one of the Claims 1 through 5,
- wherein the pipe section (2) has a greater diameter in a circumferential region (23) comprising the sensor head (1) than in the adjacent regions.

7. The arrangement according to one of the Claims 1 through 6,
- wherein the pipe section (2) is an injection molded part.

8. The arrangement according to one of the Claims 1 through 7,
- wherein the sensor head (1) comprises an NTC element.

9. The arrangement according to one of the Claims 1 through 8,
- wherein the thermally conductive body is flat in design.

10. The use of a temperature measurement device as a seal between two pipes, the temperature measurement device comprising a sensor head (1) and a pipe section (2) in which the sensor head (1) is embedded, the pipe section (2) being provided for carrying a medium, the temperature thereof being captured by the sensor head (1),
wherein at least one thermally conductive body is embedded in the pipe section (2) and contacts the sensor head (1), wherein the thermal conductivity of the thermally conductive body exceeds that of the pipe section (2), and wherein the thermal conductivity body follows the pipe circumference and is implemented as a ring.

## Revendications

1. Arrangement composé de deux tubes et d'un dispositif de mesure de température,
dans lequel le dispositif de mesure de température comporte une tête sensible (1) et un tronçon de tube (2) dans lequel est incorporée la tête sensible (1),
dans lequel le tronçon de tube (2) est prévu pour acheminer un fluide dont la température peut être détectée au moyen de la tête sensible (1), et dans lequel le tronçon de tube (2) est utilisé comme joint entre les deux tubes,
dans lequel au moins un corps conducteur de chaleur est incorporé dans le tronçon de tube (2), lequel corps conducteur de chaleur est en contact avec la tête sensible (1),
dans lequel la conductivité thermique du corps conducteur de chaleur est supérieure à celle du tronçon de tube (2) et
**caractérisé en ce que**
le corps conducteur de chaleur suit la circonférence du tube et se présente sous la forme d'un anneau.

2. Arrangement selon la revendication 1,
- dans lequel le tronçon de tube (2) présente une saillie (21) tournée vers l'intérieur, dans laquelle est enfermée au moins une partie de la tête sensible (1).

3. Arrangement selon la revendication 1 ou 2,
- dans lequel le côté intérieur du tronçon de tube (2) est exempt d'interface dans la zone de la tête sensible (1).

4. Arrangement selon l'une des revendications 1 à 3,
- dans lequel le tronçon de tube (2) présente sur sa face frontale des dispositifs d'encliquetage.

5. Arrangement selon l'une des revendications 1 à 4,
- dans lequel le tronçon de tube (2) étant relié de manière monolithique à un dispositif de fiche de connexion (3) dans lequel sont intégrés des conducteurs d'alimentation (11) électrique qui sont reliées de manière conductrice à la tête sensible (1).

6. Arrangement selon l'une des revendications 1 à 5,
- dans lequel le tronçon de tube (2) présente dans une zone circonférentielle (23) entourant la tête sensible (1) un diamètre plus grand que dans les zones limitrophes.

7. Arrangement selon l'une des revendications 1 à 6,
- dans lequel le tronçon de tube (2) est une pièce moulée par injection.

8. Arrangement selon l'une des revendications 1 à 7,
- dans lequel la tête sensible (1) comporte un élément CTN.

9. Arrangement selon l'une des revendications 1 à 8,
- dans lequel le corps conducteur de chaleur se présente sous une forme plate.

10. Utilisation d'un dispositif de mesure de température en tant joint d'étanchéité entre deux tubes, sachant que le dispositif de mesure de température comporte une tête sensible (1) et un tronçon de tube (2) dans lequel la tête sensible (1) est incorporée, sachant que le tronçon de tube (2) est prévu pour acheminer un fluide dont la température peut être détectée au moyen de la tête sensible (1),
dans lequel au moins un corps conducteur de chaleur est incorporé dans le tronçon de tube (2), lequel corps conducteur de chaleur est en contact avec la tête sensible (1),
dans lequel la conductivité thermique du corps conducteur de chaleur est supérieure à celle du tronçon de tube (2) et
dans lequel le corps conducteur de chaleur suit la circonférence du tube et e se présente sous la forme d'un anneau.
